# EUROPÄISCHE PATENTSCHRIFT

(11) **EP 1 023 963 B1**
(45) Veröffentlichungstag und Bekanntmachung des Hinweises auf die Patenterteilung: **15.12.2004**
(21) Anmeldenummer: 00100317.7
(22) Anmeldetag: 07.01.2000
(51) Int. Cl.: B23G 1/46

(54) **Gewindeschneidapparat mit Drehrichtungsumkehr**
Thread cutting apparatus with direction of rotation reversing
Appareil à fileter avec inverseur de la direction de rotation

(30) Priorität: 26.01.1999 DE 19902901
(43) Veröffentlichungstag der Anmeldung: 02.08.2000
(73) Patentinhaber: EMUGE-Werk Richard Glimpel GmbH & Co.KG Fabrik für Präzisionswerkzeuge, 91207 Lauf (DE)
(72) Erfinder: Watzke, Rüdiger, Dipl.-Ing., 91233 Neunkirchen (DE)
(74) Vertreter: Matschkur, Peter

(56) Entgegenhaltungen:
- EP-A- 0 509 143
- DE-C- 19 722 257
- US-A- 4 685 362

## Beschreibung

Die Erfindung bezieht sich auf einen Gewindeschneidapparat mit Drehrichtungsumkehr mit einem Planetengetriebe mit einer axial verschiebbaren Umschalteinrichtung zum Umschalten der Drehrichtung eines im Spannkopf einer, vorzugsweise gegen eine Längenausgleichsfeder, ausziehbaren Spindel gehalterten Bohrers nach Erreichen der vorgegebenen Bohrtiefe, insbesondere Reversierfutter mit Druckausgleichsleitungen, die in eine durch eine bewegliche Wand gegenüber der Außenluft abgedichtete Ausgleichskammer einmünden (EP-A-0 509 143).

Bei derartigen Gewindeschneidapparaten ist bisher der Aufbau grundsätzlich so getroffen, dass der Gewindebohrer die Schaltbewegung beim Reversieren veranlasst. Beim Erreichen der Gewindeendtiefe wird das Futter über die gesteuerte Vorschubeinheit zurückgefahren. Dabei wird der Bohrer ausgezogen und dieser Auszugsweg ist der Schaltweg für das Getriebe. Dieser Auszugsweg stellt dabei einen für das freie Fahren des Bohrers notwendigen, aber ansonsten unnötigen Maschinenweg dar. Dieses dadurch verursachte Luftschneiden von ca. 6 bis 10 mm vor Erreichen des Werkstücks verlängert den Gewindebohrzyklus und damit die Effektivität des gesamten Fertigungsprozesses.

Die erreichbare Gewindetiefengenauigkeit ist dadurch verschlechtert, dass die NC-Maschine bei exaktem Tiefenmaß schaltet, möglicherweise aber das Schaltglied infolge ungünstiger Stellung Zahn auf Zahn des Planetengetriebes nicht sofort einrasten kann. Die Ungenauigkeit hängt dabei von der Härte der Längenausgleichsfeder ab, die die Umschalteinrichtung mit der Futterabtriebswelle verbindet. Eine höhere Federhärte erhöht die erreichbare Gewindetiefengenauigkeit, führt aber auf der anderen Seite wiederum dazu, dass speziell bei kleineren Bohrergrößen die daraus resultierende höhe Rückzugskraft zu einer erhöhten Flankenreibung am Gewindebohrer und dadurch zu Standzeitverlust unter Gefahr einer Beschädigung des Gewindes führt.

Der Erfindung liegt daher die Aufgabe zugrunde, einen Gewindeschneidapparat der eingangs genannten Art so auszugestalten, dass einerseits eine hohe Gewindetiefengenauigkeit erreicht und andererseits eine Überlastung des Bohrers auch bei kleinen Bohrergrößen vermieden ist.

Zur Lösung dieser Aufgabe ist erfindungsgemäß vorgesehen, dass die Umschalteinrichtung durch ein externes Antriebsglied betätigt wird, das von einem über ein Stellglied erzeugten Umschaltsignal betätigbar ist.

Erfindungsgemäß wird das Reversieren also nicht mehr durch das Ausziehen des Bohrer beim Zurückfahren der gesteuerten Vorschubeinheit ausgelöst, sondern über ein gesondertes Antriebsglied, das seine Energie auch nicht aus der Auszugsbewegung selbst bezieht, sondern beispielsweise pneumatisch oder elektrisch angetrieben ist. Das externe Antriebsglied kann dabei ein vorzugsweise zweikammriger Hydraulikzylinder sein, der entweder über Pressluft oder durch das unter Druck stehende Kühlmittel betätigt wird. Gegebenenfalls kann das Antriebsglied auch ein einkammeriger Hydraulikzylinder sein, der mit nur einer Ansteuerleitung auskommend gegen eine Rückstellfeder arbeitet. In Ausgestaltung der Erfindung ist es dabei auch möglich, das externe Antriebsglied als elektromagnetisch angetriebene Stellglied auszubilden.

Diese Unabkömmlichkeit der Umschalteinrichtung von der Auszugsbewegung des Bohrer macht es nicht nur möglich, die Längenausgleichsfeder sehr weich auszulegen, so dass eine Überlastung des Bohrers mit der Gefahr einer Beschädigung des Bohrers oder des Gewindes selbst zu vermeiden, sondern ermöglicht darüber hinaus auch einen Aufbau, bei dem die Längenausgleichsfeder gänzlich entfällt und ein Futter zum Synchrongewindeschneiden verwendet werden kann. Die Möglichkeit der weicheren Auslegung der Längenausgleichsfeder hat darüber hinaus im übrigen auch noch den zusätzlichen Vorteil, dass die Genauigkeit des Schaltpunktes größer ist.

Das Umschaltsignal kann dabei gemäß einem weiteren Merkmal der Erfindung entweder von einem Nocken od. dgl. am Spannkopf erzeugt werden, oder aber direkt von der Vorschubsteuerung generiert werden, die mit dem Signal für das Zurückfahren der Vorschubeinheit gleichzeitig das Umschaltsignal für das externe Antriebsglied der Umschalteinrichtung erzeugen kann.

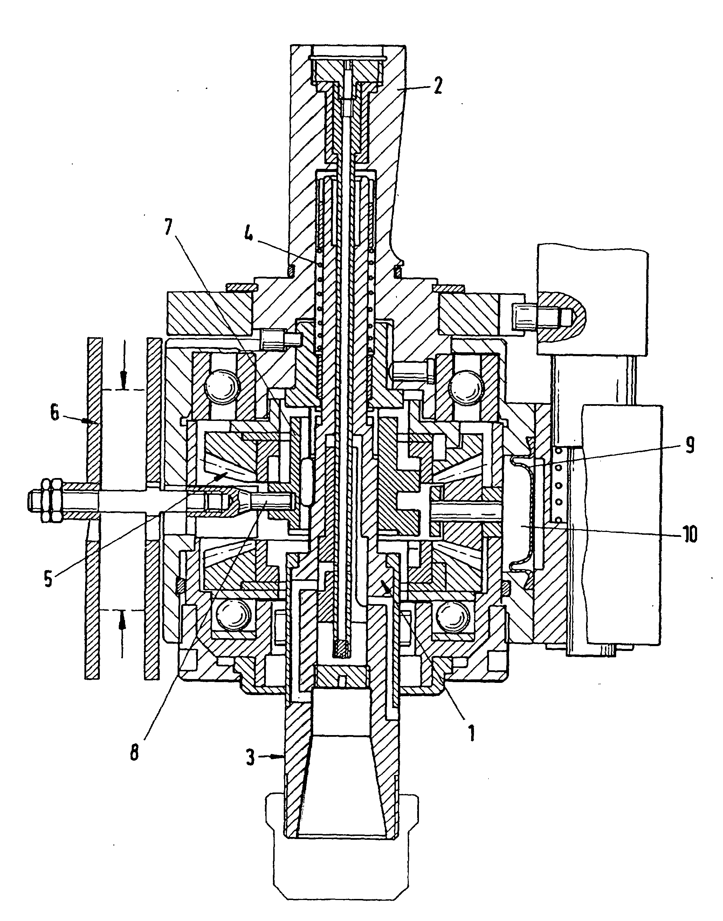

Weitere Vorteile, Merkmale und Einzelheiten der Erfindung ergeben sich aus der nachfolgenden Beschreibung eines Ausführungsbeispiels sowie anhand der Zeichnung, die einen Schnitt durch ein erfindungsgemäß ausgestaltetes Reversierfutter mit einem schematisch angedeuteten externen Antriebsglied für die Umschalteinrichtung zeigt.

Der gezeigte als Reversierfutter ausgebildete Gewindeschneidapparat besitzt eine ausziehbare Spindel 1, die mit dem Schaft 2 zur Aufnahme in die Werkzeugmaschine in getrieblicher Verbindung steht. An der ausziehbaren Spindel ist vorne der Spannkopf 3 für einen nicht gezeigten Gewindebohrer befestigt. Beim Erreichen der Gewindeendtiefe wird das gezeigte Reversierfutter über die gesteuerte Vorschubeinheit der Werkzeugmaschine zurückgefahren, wobei der Bohrer dabei gegen die Wirkung der Längenausgleichsfeder 4 ausgezogen wird. Zum Herausdrehen des Gewindebohrers - die Werkzeugmaschine dreht sich ständig in der gleichen Drehrichtung weiter - muß eine Drehrichtungsumkehr über das Planetengetriebe 5 bewerkstelligt werden, die erfindungsgemäß durch ein externes Antriebsglied 6 erfolgt. Das Umschaltglied 7, das die entsprechende Schaltbewegung im Planentengetriebe 5 bewerkstelligt, ist mit dem Schaltglied 6 über den Schaltstift 8 verbunden, wobei das Betätigungsglied 6 ein ein- oder zweikammriger Hydraulikzylinder oder auch ein elektromagnetisches Schaltglied sein kann. Die Betätigung dieses externen Antriebsglieds 6 erfolgt dabei entweder über ein, von einem Nocken am Spannkopf ausgelöstes Umschaltsignal, oder ein Umschaltsignal, das direkt in der Vorschubsteuerung der Werkzeugmaschine mit dem Umsteuersignal zum Zurückfahren der Vorschubeinheit erzeugt wird. Durch diese Unabhängigkeit der Betätigung des Umschaltgliedes 7 von der Auszugsbewegung des Bohrers beim Reversieren kann die Längenausgleichsfeder sehr weich ausgelegt werden, so dass auch bei kleinsten Bohrergrößen keine Überlastung der Gewindebohrerflanken auftreten kann, die Beschädigungen des Bohrers und/oder des von ihm geschnittenen Gewindes zur Folge haben könnte. Bei 9 erkennt man die Abschlußmembran einer Ausgleichskammer 10, in welche Druckausgleichsleitungen einmünden, die das Auftreten eines die Reversierbewegung hindernden Unterdrucks beim Ausziehen der Spindel im Zuge des Zurückfahrens der gesteuerten Vorschubeinheit verhindern. Im Gegensatz zu den meist üblichen direkt in die Außenatmosphäre mündenden Druckausgleichsleitungen hat das Vorsehen der Ausgleichskammer 10 mit der beweglichen Membran 9 den Vorteil, dass das Eindringen von Spänen, Flüssigkeit oder sonstigem Schmutz aus der Umgebung ins Innere des Futters verhindert ist.

## Patentansprüche

1. Gewindeschneidapparat mit Drehrichtungsumkehr mit einem Planetengetriebe (5) mit einer axial verschiebbaren Umschatteinrichtung zum Umschalten der Drehrichtung eines im Spannkopf (3) einer, vorzugsweise gegen eine Längenausgleichsfeder (4), ausziehbaren Spindel (1) gehalterten Bohrers nach Erreichen der vorgegebenen Bohrtiefe, insbesondere Reversierfutter mit Druckausgleichsleitungen, die in eine durch eine bewegliche Wand gegenüber der Außenluft abgedichtete Ausgleichskammer einmünden, **dadurch gekennzeichnet, dass** die Umschalteinrichtung (7) durch ein externes Antriebsglied (6) betätigt wird, das von einem über ein Stellglied erzeugtes Umschaltsignal betätigbar ist.

2. Gewindeschneidapparat nach Anspruch 1, **dadurch gekennzeichnet, dass** das Umschaltsignal von einem Nocken od. dgl. am Spannkopf erzeugt wird.

3. Gewindeschneidapparat nach Anspruch 1, **dadurch gekennzeichnet, dass** das Umschaltsignal von der Vorschubsteuerung erzeugt wird.

4. Gewindeschneidapparat nach einem der Ansprüche 1 bis 3, **dadurch gekennzeichnet, dass** er als Futter zum Synchrongewindeschneiden ohne Spindelauszug ausgebildet ist.

5. Gewindeschneidapparat nach einem der Ansprüche 1 bis 4, **dadurch gekennzeichnet, dass** das externe Antriebsglied (6) ein vorzugsweise zweikammriger Hydraulikzylinder ist.

6. Gewindeschneidapparat nach Anspruch 5, **dadurch gekennzeichnet, dass** das Hydraulikmedium Pressluft ist.

7. Gewindeschneidapparat nach Anspruch 5, **dadurch gekennzeichnet, dass** als Hydraulikmedium das unter Druck stehende Kühlmittel verwendet wird.

8. Gewindeschneidapparat nach Anspruch 1 bis 4, **dadurch gekennzeichnet, dass** das externe Antriebsglied (6) einen Elektromagneten enthält.

## Claims

1. Thread-cutting apparatus with reversal of the direction of rotation, having a planetary gear (5) with an axial displaceable switching device for switching the direction of rotation of a drill mounted in the grip head (3) of a spindle (1), which spindle is extensible preferably against a longitudinal equalisation spring (4) when the specified drilling depth has been reached, in particular reversing chuck with pressure equalisation lines, which open into an equalisation chamber sealed against the outside air by a movable wall, **characterised in that** the switching device (7) is actuated by an external drive member (6), which is actuatable by a switching signal generated via an actuator.

2. Thread-cutting apparatus according to claim 1, **characterised in that** the switching signal is generated by a cam or the like on the grip head.

3. Thread-cutting apparatus according to daim 1, **characterised in that** the switching signal is generated by the forward feed control.

4. Thread-cutting apparatus according to one of claims 1 to 3, **characterised in that** it is formed as a chuck for synchronous thread cutting without spindle extension.

5. Thread-cutting apparatus according to one of claims 1 to 4, **characterised in that** the external drive member (6) is preferably a double-chamber hydraulic cylinder.

6. Thread-cutting apparatus according to claim 5, **characterised in that** the hydraulic medium is compressed air.

7. Thread-cutting apparatus according to claim 5, **characterised in that** as a hydraulic medium, the coolant, which is under pressure, is used.

8. Thread-cutting apparatus according to claim 1 to 4, **characterised in that** the external drive member (6) contains an electromagnet.

## Revendications

1. Appareillage pour le filetage à inversion de sens de rotation, du type comportant un train d'engrenages planétaires (5), et comprenant un système de commande de commutation mobile axialement destiné à inverser le sens de rotation d'un taraud monté extractible sur une broche (1) de la tête de serrage (3), de préférence à l'encontre d'un ressort de compensation de longueur (4), intervenant après que soit atteinte une profondeur de filet déterminée, en particulier une gaine d'inversion équipée de conduites d'égalisation de pression débouchant dans une chambre d'égalisation étanchéisée par une paroi mobile vis-à-vis de l'air extérieur, **caractérisé en ce que** le système de commutation (7) est actionné par un organe extérieur d'entraînement (6) qui peut être actionné par un signal de commutation provenant d'un organe de réglage.

2. Appareillage pour le filetage selon la revendication 1, **caractérisé en ce que** le signal de commutation provient d'un ergot, came ou analogue, situé sur la tête de serrage.

3. Appareillage pour le filetage selon la revendication 1, **caractérisé en ce que** le signal provient de la commande de déplacement.

4. Appareillage selon l'une quelconque des revendications 1 à 3, **caractérisé en ce qu'**il est constitué par une gaine pour le filetage synchronisé sans extraction de broche.

5. Appareillage pour le filetage selon l'une quelconque des revendications 1 à 4, **caractérisé en ce que** l'organe extérieur d'entraînement (6) est un cylindre hydraulique, de préférence à deux cylindres.

6. Appareillage pour le filetage selon la revendication 5, **caractérisé en ce que** l'agent hydraulique est de l'air sous pression.

7. Appareillage pour le filetage selon la revendication 5, **caractérisé en ce que** l'on utilise comme agent hydraulique un agent refroidissant maintenu sous pression.

8. Appareillage pour le filetage selon l'une quelconque des revendications 1 à 4, **caractérisé en ce que** l'organe extérieur d'entraînement (6) contient un électro-aimant.
